# EUROPÄISCHE PATENTSCHRIFT

(11) **EP 2 102 263 B1**
(45) Veröffentlichungstag und Bekanntmachung des Hinweises auf die Patenterteilung: **06.07.2011**
(21) Anmeldenummer: 07856915.9
(22) Anmeldetag: 19.12.2007
(51) Int. Cl.: C08G 18/28, C08G 18/62, C08G 18/80, C09D 175/04

(54) **BESCHICHTUNGSMITTEL MIT HOHER KRATZBESTÄNDIGKEIT UND WITTERUNGSSTABILITÄT**
COATING AGENTS HAVING HIGH SCRATCH RESISTANCE AND WEATHERING STABILITY
AGENTS DE REVÊTEMENT À RÉSISTANCE ÉLEVÉE AUX RAYURES ET AUX INTEMPÉRIES

(30) Priorität: 19.12.2006 DE 102006059951
(43) Veröffentlichungstag der Anmeldung: 23.09.2009
(73) Patentinhaber: BASF Coatings GmbH, 48165 Münster (DE)
(72) Erfinder: GROENEWOLT, Matthijs, 48147 Münster (DE); POPPE, Andreas, 48324 Sendehorst (DE); KLEIN, Günter, 48165 Münster (DE); NIEMEIER, Manuela, 48317 Drensteinfurt (DE); WESTHOFF, Elke, 48565 Steinfurt (DE); STÜBBE, Wilfried, 48268 Greven (DE); HESENER, Simone, 48165 Münster (DE)
(74) Vertreter: Hüsener, Susanne
(86) Internationale Anmeldenummer: PCT/EP2007/011192
(87) Internationale Veröffentlichungsnummer: WO 2008/074491

(56) Entgegenhaltungen:
- WO-A-2004/046218
- WO-A-2005/033240

## Beschreibung

Die vorliegende Erfindung betrifft thermisch härtbare hochkratzfeste Beschichtungsmittel auf Basis aprotischer Lösemittel enthaltend Polyole und Polyisocyanate mit Struktureinheiten unterschiedlicher Alkoxysilanfunktionalität.

In WO-A-01/98393 werden 2K-Beschichtungsmittel beschrieben, welche ein Polyol als Bindemittelkomponente sowie als Vernetzerkomponente ein Polyisocyanat, welches teilweise mit Alkoxysilylgruppen funktionalisiert ist, enthalten. Diese Beschichtungsmittel werden als Primer eingesetzt und auf die Haftung mit metallischen Untergründen, insbesondere Aluminium-Untergründe, optimiert. Auf diese Beschichtungsmittel können im Rahmen einer OEM-Serienlackierung oder einer Reparaturlackierung Basislack-Klarlack-Aufbauten aufgebracht werden. Hinsichtlich der Kratzfestigkeit und der Witterungsstabilität sind die Beschichtungsmittel gemäß WO 01/98393 nicht optimiert.

In EP-A-0 994 117 werden feuchtehärtbare Mischungen beschrieben, welche eine Polyolkomponente und eine Polyisocyanat-Komponente, die teilweise mit einem bevorzugt zu einem Aspartat umgesetzten Monoalkoxysilylalkylamin umgesetzt sein kann, enthalten. Beschichtungen aus solchen Mischungen weisen zwar eine gewisse Härte auf, sind jedoch hinsichtlich Witterungsstabilität und insbesondere hinsichtlich ihrer Kratzfestigkeit für OEM-Anwendungen nur bedingt geeignet.

US-A-2006/0217472 beschreibt Beschichtungsmittel, welche ein hydroxyfunktionelles Acrylat, eine niedermolekulare Polyol-Komponente, ein Polyisocyanat sowie eine aminofunktionelle Alkoxysilylkomponente, bevorzugt Bisalkoxysilylamin, enthalten können. Solche Beschichtungsmittel werden als Klarlack in Basislack-Klarlack-Aufbauten eingesetzt und führen zu kratzfesten Beschichtungen. Solche Beschichtungsmittel sind allerdings nur sehr bedingt lagerfähig und die resultierenden Beschichtungen weisen eine geringe Witterungsstabilität, insbesondere gegen UV-Strahlung im Feucht-Trocken-Zyklus, auf.

In WO 2006/042585 werden Klarlacke, die für die OEM-Serienlackierung geeignet sind, beschrieben, welche als Hauptbindemittelkomponente Polyisocyanate, deren Isocyanatgruppen vorzugsweise zu mehr als 90 mol-% mit Bisalkoxysilylaminen umgesetzt sind, enthalten. Solche Klarlacke weisen eine ausgezeichnete Kratzbeständigkeit bei gleichzeitig hoher Chemikalien- und Witterungsbeständigkeit auf. Allerdings besteht noch Bedarf nach weiterer Verbesserung der Witterungsstabilität, insbesondere gegen Rißbildung bei UV-Bestrahlung im Feucht-Trockenzyklus, bei Erhalt des hohen Niveaus der Kratzfestigkeit.

EP-A-1 273 640 beschreibt 2K-Beschichtungsmittel, bestehend aus einer Polyol-Komponente und einer Vernetzerkomponente, bestehend aus aliphatischen und/oder cycloaliphatischen Polyisocyanaten, wobei 0,1 bis 95 mol-% der ursprünglich freien vorhandenen Isocyanatgruppen mit Bisalkoxylsilylamin umgesetzt ist. Diese Beschichtungsmittel können für die OEM-Serienlackierung eingesetzt werden und weisen eine gute Kratzbeständigkeit bei gleichzeitig guter Beständigkeit gegen Umwelteinflüsse auf. Jedoch neigen diese Beschichtungsmittel besonders stark zur Nachvemetzung, da der Umsatz beim thermischen Aushärten nach der Applikation ungenügend ist. Dies wirkt sich besonders auf die Witterungsstabilität negativ aus.

### Aufgabe und Lösung

Aufgabe der vorliegenden Erfindung war es, Beschichtungsmittel, insbesondere für die Klarlackschicht bei OEM-Serienlackierungen und bei Automobilreparaturlackierungen, zur Verfügung zu stellen, die zu einem hochgradig witterungsstabilen Netzwerk führen, wobei die unerwünschte Ausbildung von hydrolyse- und witterungslabilen Gruppierungen weitestgehend unterdrückt wird, um eine hohe Säurefestigkeit zu gewähr leisten. Daneben sollen die Beschichtungsmittel zu Beschichtungen führen, welche hochgradig kratzfest sind und insbesondere einen hohen Glanzerhalt nach Kratzbelastung aufweisen. Weiterhin sollten sich die Beschichtungen und Lackierungen, speziell die Klarlackierungen, auch in Schichtdicken > 40 µm herstellen lassen, ohne dass Spannungsrisse auftreten. Dies ist eine wesentliche Voraussetzung für die Verwendung der Beschichtungen und Lackierungen, insbesondere der Klarlackierungen, in dem technologisch und ästhetisch besonders anspruchsvollen Gebiet der Automobilserienlackierung (OEM).

Insbesondere sollten Klarlackierungen mit hoher Beständigkeit, besonders gegen Rissbildung, bei Bewitterung mit UV-Strahlung im Feucht-Trockenzyklus in Kombination mit ausgezeichneter Kratzfestigkeit zur Verfügung gestellt werden.

Darüber hinaus sollen die neuen Beschichtungsmittel einfach und sehr gut reproduzierbar herstellbar sein und während der Lackapplikation keine ökologischen Probleme bereiten.

### Lösung der Aufgabe

Im Lichte der obengenannten Aufgabenstellung wurden Beschichtungsmittel auf Basis aprotischer Lösemittel gefunden, enthaltend mindestens eine hydroxylgruppenhaltige Verbindung (A) sowie mindestens eine isocyanatgruppenhaltige Verbindung (B), dadurch gekennzeichnet, dass ein oder mehrere Bestandteile des Beschichtungsmittels als zusätzliche funktionelle Komponenten zwischen
2,5 und 97,5 mol-%, bezogen auf die Gesamtheit der Struktureinheiten (I) und (II), mindestens einer Struktureinheit (I) der Formel

-N(X-SiR"x(OR')3-x)n(X'-SiR"y(OR')3-y)m (I)

wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann,
X,X'= linearer und/oder verzweigter Alkylen oder Cycloalkylenrest mit 1 bis 20 Kohlenstoffatomen,
R" = Alkyl, Cycloalkyl, Aryl oder Aralkyl, wobei die Kohlenstoffkette durch nicht benachbarte Sauerstoff-, Schwefel- oder NRa-Gruppen unterbrochen sein kann,

n =0 bis 2,
m =0 bis 2,
m+n = 2 , sowie
x,y = 0 bis 2,
und 2,5 und 97,5 mol-%, bezogen auf die Gesamtheit der Struktureinheiten (I) und (II), mindestens einer Struktureinheit (II) der Formel

-Z-(X-SiR"x(OR')3-x) (II),

wobei
Z = -NH-, -NR-,-O- mit
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
R' = Wasserstoff, Alkyl oder Cycloalkyl, wobei die Kohlenstoffkette durch nicht benachbarte Sauerstoff-, Schwefel- oder NRa-Gruppen unterbrochen sein kann,
X = linearer und/oder verzweigter Alkylen oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,

x = 0 bis 2,
aufweisen
und
das Polyol (A) mindestens ein Poly(meth)acrylatpolyol enthält.

Bevorzugt sind Beschichtungsmittel, bei denen ein oder mehrere Bestandteile des Beschichtungsmittels als zusätzliche funktionelle Komponenten zwischen 5 und 95 mol-%, insbesondere zwischen 10 und 90 mol-%, besonders bevorzugt zwischen 20 und 80 mol-%, und ganz besonders zwischen 30 und 70 mol%, jeweils bezogen auf die Gesamtheit der Struktureinheiten (I) und (II), mindestens einer Struktureinheit der Formel (I) und zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (I) und (II), mindestens einer Struktureinheit der Formel (II), aufweisen.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Beschichtungsmittels gelöst werden konnten.

Die erfindungsgemäßen Komponenten können besonders einfach und sehr gut reproduzierbar hergestellt werden und bereiten bei der Lackapplikation keine signifikanten toxikologischen und ökologischen Probleme.

Die erfindungsgemäßen Beschichtungsmittel liefern neue Beschichtungen und Lackierungen, speziell Klarlackierungen, die hoch kratzfest sind und im Gegensatz zu gängigen hochvemetzten kratzfesten Systemen säureresistent sind. Weiterhin lassen sich die erfindungsgemäßen Beschichtungen und Lackierungen, speziell die Klarlackierungen, auch in Schichtdicken > 40 µm herstellen, ohne dass Spannungsrisse auftreten. Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Dabei zeichnen sie sich durch eine besonders hohe Waschstraßenbeständigkeit und Kratzfestigkeit aus. Insbesondere ist die hohe Kratzfestigkeit der Beschichtungen direkt nach der Härtung der Beschichtungen gegeben, so dass die Beschichtungen direkt im Anschluß an die Härtung problemlos gehandhabt werden können. Außerdem ist die Beständigkeit der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit ausgezeichnet.

### Beschreibung der Erfindung

### Die hydroxylgruppenhaltige Verbindung (A)

Als hydroxylgruppenhaltige Verbindung (A) werden vorzugsweise niedermolekulare Polyole als auch oligo- und/oder polymere Polyole eingesetzt, wobei das Polyol (A) mindestens ein Poly(meth)acrylatpolyol enthält.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerytritol sowie Dipentaerytritol, eingesetzt.

Bevorzugt werden solche niedermolekularen Polyole in untergeordneten Anteilen der oligo- und/oder polymeren Polyolkomponente (A) beigemischt.

Die bevorzugten oligo- und/oder polymeren Polyole (A) weisen massenmittlere Molekulargewichte Mw> 500 Dalton, gemessen mittels GPC (Gelpermeationschromatographie), bevorzugt zwischen 800 und 100.000 Dalton, insbesondere zwischen 1.000 und 50.000 Dalton auf. Besonders bevorzugt sind insbesondere Polyacrylatpolyole und/oder Polymethacrylatpolyole sowie deren Mischpolymerisate, im folgenden Polyacrylatpolyole genannt. Die Polyole weisen bevorzugt eine OH-Zahl von 30 bis 400 mg KOH/g, insbesondere zwischen 100 und 300 KOH/g, auf. Die Glasübergangstemperaturen, gemessen per DSC (DifferentialThermoanalyse), der Polyole liegen bevorzugt zwischen -150 und 100 °C, besonders bevorzugt zwischen -120°C und 80°C.

Die erfindungsgemäß eingesetzten Polyacrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard. Die Glasübergangstemperatur der Copolymerisate liegt in der Regel zwischen - 100 und 100°C, insbesondere zwischen -50 und 80 °C (gemessen mittels DSC-Messungen). Die Polyacrylatpolyole weisen bevorzugt eine OH-Zahl von 60 bis 250 mg KOH/g, insbesondere zwischen 70 und 200 KOH/g, sowie eine Säurezahl zwischen 0 und 30 mg KOH/g, auf.

Die Hydroxylzahl (OH-Zahl) gibt an, wieviel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Säurezahl gibt hierbei die Anzahl der mg Kaliumhydroxyid an, die zur Neutralisation von 1 g der jeweiligen Verbindung der Komponente (b) verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2- Hydroxypropylacrylat, 2- Hydroxypropylmethacrylat, 3-Hydroxypropylacrylat, 3-Hydroxypropylmethacrylat , 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Polyacrylatpolyole bevorzugt Alkylmethacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

In einer weiteren Ausführungsform der Erfindung weist die hydroxylgruppenhaltige Verbindung A neben den Hydroxylgruppen Struktureinheiten der Formel (I) und/oder der Formel (II) auf.

Struktureinheiten der Formel (I) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (Ia)

HN(X-SiR"x(OR')3-x)n(X'-SiR"y(OR')3-y)m (Ia),

eingeführt, wobei die Substituenten die obengenannte Bedeutung haben. Zur Umsetzung des Polyols mit der Verbindung (Ia) weist dieses entsprechend weitere funktionelle Gruppen auf, welche mit der sekundären Aminogruppe der Verbindung (Ia) reagieren, wie insbesondere Säure- oder Epoxygruppen. Erfindungsgemäß bevorzugte Verbindungen (Ia) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN ® der Fa. DEGUSSA bzw. Silquest ® der Fa. OSI verfügbar.

Monomerbausteine, die die Strukturelemente (I) tragen, sind vorzugsweise Umsetzungsprodukte der Acryl- und/oder der Methacrylsäure oder von epoxygruppenhaltigen Alkylacrylaten und/oder -methacrylaten mit den oben genannten Verbindungen (Ia).

Struktureinheiten der Formel (II) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIa)

H-Z-(X-SiR"x(OR')3-x) (IIa),

eingeführt werden, wobei die Substituenten die obengenannte Bedeutung haben. Zur Umsetzung des Polyols mit der Verbindung (Ia) weist dieses entsprechend weitere funktionelle Gruppen auf, welche mit der funktionellen Gruppe -ZH der Verbindung (IIa) reagieren, wie insbesondere Säure-, Epoxy- oder Estergruppen. Erfindungsgemäß bevorzugte Verbindungen (IIa) sind omega-Aminoalkyl- oder omega-Hydroxyalkyltrialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, , 4-Aminobutyltriethoxysilan, 2-Hydroxyethyltrimethoxysilan, 2-Hydroxyethyltriethoxysilan, 3-Hydroxypropyltrimethoxysilan, 3-Hydroxypropyltriethoxysilan, 4-Hydroxybutyltrimethoxysilan, 4-Hydroxybutyltriethoxysilan. Besonders bevorzugte Verbindungen (IIa) sind N-(2- (trimethoxysilyl) ethyl)alkylamine, N-(3-(trimethoxysilyl) propyl)alkylamine, N-(4-(trimethoxysilyl) butyl)alkylamine , N-(2-(triethoxysilyl) ethyl)alkylamine, N-(3-(triethoxysilyl) propyl)alkylamine und/oder N-(4-(triethoxysilyl) butyl)alkylamine. Ganz besonders bevorzugt ist N-(3-(trimethoxysilyl) propyl)butylamin. Solche Aminosilane sind beispielsweise unter dem Markennamen DYNASILAN ® der Fa. DEGUSSA bzw. Silquest ® der Fa. OSI verfügbar.

Monomerbausteine, die die Strukturelemente (II) tragen, sind vorzugsweise Umsetzungsprodukte der Acryl- und/oder der Methacrylsäure oder von epoxygruppenhaltigen Alkylacrylaten und/oder -methacrylaten, insbesondere mit den oben genannten hydroxy- und/oder aminofunktionellen Alkoxysilylverbindungen (IIa).

### Die isocyanatgruppenhaltigen Verbindungen (B)

Die als Grundkörper für die erfindungsgemäß bevorzugt eingesetzten isocyanatgruppenhaltigen Verbindungen (B) dienenden Di- und/oder Polyisocyanate sind bevorzugt an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate PI sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuß an vorgenannten Polyisocyanaten erhalten werden. Solche Polyisocyanat-Präpolymere sind beispielsweise in US-A-4,598,131 beschrieben.

Die erfindungsgemäß ganz besonders bevorzugten mit den Struktureinheiten (I) und (II) funktionalisierten isocyanatgruppenhaltigen Verbindungen (B) werden besonders bevorzugt durch Umsetzung der vorgenannten Di- und/oder Polyisocyanate mit den vorgenannten Verbindungen (Ia) und (IIa) hergestellt, indem zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (Ia) und
zwischen 2,5 und 90 mol-%, bevorzugt 5 bis 85 mol%, besonders bevorzugt 7,5 bis 80 mol-%, der Isocyanatgruppen im Polyisocyanatgrundkörper mit mindestens einer Verbindung (IIa)
umgesetzt werden.

Der Gesamtanteil der mit den Verbindungen (Ia) und (IIa) umgesetzten Isocyanatgruppen liegt in der Polyisocyanatverbindung (B) zwischen 5 und 95 mol-%, bevorzugt zwischen 10 und 90 mol-%, besonders bevorzugt zwischen 15 und 85 mol-% der Isocyanatgruppen im Polyisocyanatgrundkörper.

Besonders bevorzugte Verbindungen (Ia) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN ® der Fa. DEGUSSA bzw. Silquest ® der Fa. OSI verfügbar.

Bevorzugte Verbindungen (IIa) sind 2-Aminoethyltrimethoxysilan; 2-Aminoethyltriethoxysilan, 3-Aminopropyltrimethoxysilan, 3-Aminopropyltriethoxysilan, 4-Aminobutyltrimethoxysilan, , 4-Aminobutyltriethoxysilan, 2-Hydroxyethyltrimethoxysilan, 2-Hydroxyethyltriethoxysilan, 3-Hydroxypropyltrimethoxysilan, 3-Hydroxypropyltriethoxysilan, 4-Hydroxybutyltrimethoxysilan, 4-Hydroxybutyltriethoxysilan. Besonders bevorzugte Verbindungen (IIa) sind N-(2- (trimethoxysilyl) ethyl)alkylamine, N-(3-(trimethoxysilyl) propyl)alkylamine, N-(4-(trimethoxysilyl) butyl)alkylamine , N-(2-(triethoxysilyl) ethyl)alkylamine, N-(3-(triethoxysilyl) propyl)alkylamine und/oder N-(4-(triethoxysilyl) butyl)alkylamine. Ganz besonders bevorzugt ist N-(3-(trimethoxysilyl) propyl)butylamin. Solche Aminosilane sind beispielsweise unter dem Markennamen DYNASILAN ® der Fa. DEGUSSA bzw. Silquest ® der Fa. OSI verfügbar.

Ganz besonders bevorzugte isocyanatgruppenhaltige Verbindungen (B) sind Umsetzungsprodukte von Hexamethylen-1,6-diisocyanat und/oder Isophorondiisocyanat, und/oder deren Isocyanurat-Trimere mit Bis(3-propyltrimethoxysilyl)amin und N-(3-(trimethoxysilyl) propyl)butylamin.

Die Umsetzung der isocyanatgruppenhaltigen Verbindungen (B) mit den Verbindungen (Ia) und (IIa) erfolgt vorzugsweise in Inertgasatmosphäre bei Temperaturen von maximal 100 °C, bevorzugt von maximal 60 °C.

Die freien Isocyanatgruppen des isocyanatgruppenhaltigen Verbindungen B können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt.

### Die Kombination der Komponenten A und B sowie weitere Komponenten des Beschichtungsmittels

Der Gewichtsanteil der einzusetzenden hydroxylgruppenhaltigen Verbindungen A, bezogen auf den Gewichtsanteil der isocyanatgruppenhaltigen Verbindungen B, hängt vom Hydroxyäquivalentgewicht des Polyols und vom Äquivalentgewicht der freien Isocyanatgruppen des Polyisocyanats B ab.

Erfindungswesentlich ist, dass im erfindungsgemäßen Beschichtungsmittel 2,5 bis 97,5 mol-%, bezogen auf die Summe der Struktureinheiten I und II, an Struktureinheiten I und 2,5 bis 97,5 mol-%, bezogen auf die Summe der Struktureinheiten I und II, an Struktureinheiten II vorhanden sind.

Die erfindungsgemäßen Beschichtungsmittel enthalten bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der hydroxylgruppenhaltigen Verbindungen (A) und bevorzugt zwischen 2,5 und 97,5 Gew.-%, besonders bevorzugt zwischen 5 und 95 Gew.-%, ganz besonders bevorzugt zwischen 10 und 90 Gew.%, insbesondere zwischen 20 und 80 Gew.-%, bezogen auf den Gehalt an nichtflüchtigen Substanzen im Beschichtungsmittel, der isocyanatgruppenhaltigen Verbindungen (B).

Bezogen auf die Summe der für die Vernetzung im erfindungsgemäßen Beschichtungsmittel maßgeblichen funktionellen Gruppen, gebildet aus den Anteilen der Hydroxyl- und Isocyanatgruppen sowie den Anteilen der Strukturelemente (I) und (II), sind die Strukturelemente (I) und (II) bevorzugt in Anteilen von 2,5 bis 97,5 mol-%, besonders bevorzugt zwischen 5 und 95 mol-% und ganz besonders bevorzugt zwischen 10 und 90 mol-% vorhanden.

Um weiter verbesserte Beständigkeiten der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit direkt im Anschluß an die thermische Härtung, einen hohen Glanz und einen hohen Glanzerhalt nach Bewitterung zu gewährleisten, ist es außerdem bevorzugt, den Gehalt an Struktureinheiten (I) und/oder (II) und/oder (III) maximal so hoch zu wählen, dass die erfindungsgemäßen Beschichtungsmittel weniger als 6,5 Massen-% Si der Struktureinheiten (I)) und/oder (II) und/oder (III), ganz besonders maximal 6,0 Massen-% Si der Struktureinheiten (I)) und/oder (II) und/oder (III), jeweils bezogen auf den Feststoffgehalt der Beschichtungsmittel, enthalten. Der Silangehalt in Masse-% Si wird dabei rechnerisch aus den eingesetzten Mengen an den Verbindungen mit der Struktureinheit (I) bzw. den Verbindungen (IIa) bzw. (IIIa) ermittelt.

In einer weiteren Ausführungsform der Erfindung können die Strukturelemente (I) und/oder (II) zusätzlich auch Bestandteil einer oder mehrerer sich von den Komponenten (A) und (B) unterscheidender weiterer Komponenten (C) sein, wobei die vorgenannten Kriterien anzuwenden sind. Beispielsweise können als Komponente (C) Oligomerisate oder Polymerisate mit Alkoxysilyl-Gruppen eingesetzt werden, wie beispielsweise die in den Patent(anmeldung)en US-A-4,499,150, US-A-4,499,151 oder EP-A-0 571 073 genannten Poly(meth)acrylate als Träger von Strukturelementen (II) oder die in der WO-A-2006/042585 genannten Verbindungen als Träger von Strukturelementen (I). In der Regel werden solche Komponenten (C) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Die Gewichtsanteile des Polyols A und des Polyisocyanats B werden vorzugsweise solchermaßen gewählt, dass das molare Äquivalentverhältnis der nicht umgesetzten Isocyanatgruppen der isocyanathaltigen Verbindungen (B) zu den Hydroxylgruppen der hydroxylgruppenhaltigen Verbindungen (A) zwischen 0,9:1 und 1:1,1, bevorzugt zwischen 0,95:1 und 1,05:1, besonders bevorzugt zwischen 0,98:1 und 1,02:1, liegt.

Handelt es sich um einkomponentige Beschichtungsmittel, so werden die isocyanatgruppenhaltigen Verbindungen (B) gewählt, deren freie Isocyanatgruppen mit den oben beschriebenen Blockierungsmitteln blockiert sind.

Bei den erfindungsgemäß bevorzugten 2-komponentigen (2K) Beschichtungsmitteln wird kurz vor der Applikation des Beschichtungsmittel eine Lackkomponente, enthaltend die hydroxylgruppenhaltige Verbindung (A) sowie weitere nachfolgend beschriebene Komponenten, mit einer weiteren Lackkomponente, enthaltend die isocyanatgruppenhaltige Verbindung (B) und gegebenenfalls weitere der nachfolgend beschriebenen Komponenten in an sich bekannter Weise vermischt, wobei in der Regel die Lackkomponente, die die Verbindung (A) enthält, den Katalysator sowie einen Teil des Lösemittels enthält.

Als Katalysatoren für die Vernetzung der Alkoxysilyl-Einheiten sowie für die Reaktion zwischen den Hydroxylgruppen der Verbindung (A) und den freien Isocyanatgruppen der Verbindung (B) können an sich bekannte Verbindungen eingesetzt werden. Beispiele sind Lewis-Säuren (Elektronenmangelverbindungen), wie beispielsweise Zinnnaphtenat, Zinnbenzoat, Zinnnoctoat, Zinnbutryrat, Dibutylzinndilaurat, Dibutylzinndiacetat, Dibutylzinnoxid, Bleioctoat, sowie Katalysatoren wie in WO-A-2006/042585 beschrieben. Als Katalysatoren für die Vernetzung der Alkoxysilyl-Einheiten werden bevorzugt Aminaddukte der Phosphorsäure oder der Sulfonsäure eingesetzt (z.B. Nacure-Typen der Fa. King Industries).

Als Katalysator werden besonders bevorzugt phosphorhaltige, insbesondere phosphor- und stickstoffhaltige Katalysatoren eingesetzt. Dabei können auch Mischungen aus zwei oder mehreren verschiedenen Katalysatoren eingesetzt werden.

Beispiele für geeignete phosphorhaltige Katalysatoren sind substituierte Phosphonsäurediester und Diphosphonsäurediester, vorzugsweise aus der Gruppe, bestehend aus acyclischen Phosphonsäurediestem, cyclischen Phosphonsäurediestem, acyclischen Diphosphonsäurediestem und cyclischen Diphosphonsäurediestem. Derartige Katalysatoren sind beispielsweise in der deutschen Patentanmeldung DE-A-102005045228 beschrieben.

Ganz besonders bevorzugt werden aber substituierte Phosphorsäuremonoester und Phosphorsäurediester, vorzugsweise aus der Gruppe, bestehend aus acyclischen Phosphorsäurediestern und cyclischen Phosphorsäurediestem, besonders bevorzugt Aminaddukte der Phosphorsäure-mon- und -di-ester, eingesetzt. Insbesondere werden die entsprechenden aminblockierten Phosphorsäureester, und hier bevorzugt aminblockierte Phosphorsäureethylhexylester und aminblockierte Phosphorsäurephenylester, ganz besonders bevorzugt amin-blockierter Phosphorsäure-bis(2-ethylhexyl)ester eingesetzt.

Die Katalaysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt. Eine geringere Wirksamkeit des Katalysators kann dabei durch entsprechend höhere Einsatzmengen teilweise kompensiert werden.

Als Lösemittel für die erfindungsgemäßen Beschichtungsmittel sind insbesondere solche geeignet, die im Beschichtungsmittel chemisch inert gegenüber den Verbindungen (A) und (B) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf.

Neben den Verbindungen (A), (B) und (C) können noch weitere Bindemittel (D) eingesetzt werden, welche vorzugsweise mit den Hydroxylgruppen der Verbindung (A) und/oder mit den freien Isocyanatgruppen der Verbindung (B) und/oder mit den Alkoxysilylgruppen der Verbindungen (A), (B) und/oder (C) reagieren und Netzwerkpunkte ausbilden können.

Beispielsweise sind als Komponente (D) Aminoplastharze und/oder Epoxyharze, verwendbar. Es kommen die üblichen und bekannten Aminoplastharze in Betracht, deren Methylol- und/oder Methoxymethylgruppenteilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (D) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Darüber hinaus kann das erfindungsgemäße Beschichtungsmittel mindestens ein übliches und bekanntes Lackadditiv in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktiwerdünner, wie sie aus dem Stand der Technik allgemein bekannt sind, welche bevorzugt inert gegenüber den -Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- und /oder Flammschutzmittel.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die modulare Kratzfestausrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung angewandten Temperaturen, die bevorzugt zwischen 30 und 90°C liegen, auch längere Härtzeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind. Insbesondere lassen sich die erfindungsgemäßen Beschichtungen und Lackierungen, speziell die Klarlackierungen, auch in Schichtdicken > 40 µm herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden.

Gegenstand der vorliegenden Erfindung ist daher auch ein mehrstufiges Beschichtungsverfahren bei dem auf ein gegebenenfalls vorbeschichtetes Substrat eine pigmentierte Basislackschicht und danach eine Schicht aus einem Beschichtungsmittel auf Basis aprotischer Lösemittel, enthaltend mindestens eine hydroxylgruppenhaltige Verbindung (A) sowie mindestens eine isocyanatgruppenhaltige Verbindung (B), aufgebracht wird, dadurch gekennzeichnet,
dass ein oder mehrere Bestandteile des auf die Basislackschicht aufgebrachten Beschichtungsmittels als zusätzliche funktionelle Komponenten
zwischen 2,5 und 97,5 mol-%, bezogen auf die Gesamtheit der Struktureinheiten (I) und (II), mindestens einer Struktureinheit der Formel (I)

-N(X-SiR"x(OR')3-x)n(X'-SiR"y(OR')3-y)m (I)

wobei R', X, X', R", n, m, m+n sowie x und y = 0 die oben angegebene Bedeutung haben,
und
zwischen 2,5 und 97,5 mol-%, bezogen auf die Gesamtheit der Struktureinheiten (I) und (II), mindestens einer Struktureinheit der Formel (II)

-Z-(X-SiR"x(OR')3-x) (II),

wobei Z, R, R', X, R" und x die oben angegebene Bedeutung haben,
aufweisen.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff., angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung angewandten Temperaturen, die bevorzugt zwischen 30 und 90°C liegen, auch längere Härtzeiten zur Anwendung kommen können.

Die mit dem erfindungsgemäßen Beschichtungsmittel erzeugten Schichten zeichnen sich vor allem durch eine besonders hohe Chemikalien- und Witterungsbeständigkeit sowie eine sehr gute Waschstraßenbeständigkeit und Kratzfestigkeit aus, insbesondere durch eine herausragende Kombination von Kratzfestigkeit und Witterungsstabilität gegen UV-Strahlung im Feucht-Trockenzyklus.

In einer weiteren bevorzugten Ausführungsform der Erfindung wird das erfindungsgemäße Beschichtungsmittel als transparenter Klarlack zur Beschichtung von Kunststoffsubstraten, insbesondere von transparenten Kunststoffsubstraten, eingesetzt. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die Beschichtungsmittel durch eine herausragende Kombination von Kratzfestigkeit und Witterungsstabilität gegen UV-Strahlung im Feucht-Trockenzyklus aus. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

### Beispiele

### Herstellung der erfindungsgemäßen Komponente B

### Herstellbeispiel VB1 - Herstellung eines teilsilanisierten Polyisocyanats (HDI mit 100 mol-% IIa: Umsetzungsrad c = 30 mol-%) (Vergleichsbeispiel)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 88,0 Gewichtsteile Solventnaphta vorgelegt. Unter Rückflusskühlung, Stickstoffüberschleierung und Rühren werden 21,8 Gewichtsteile N-[3-(trimethoxysilyl)propyl]-butylamin (IIa) (Dynasilan ® 1189 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol-% liegt.

Die Lösung des teilsilanisierten Polyisocyanats weist einen Festkörpergehalt von 47,1 Gew.-% auf.

### Herstellbeispiel B1 - Herstellung eines teilsilanisierten Polyisocyanats (HDI mit 70 mol-% IIa und 30 mol-% Ia: Umsetzungsgrad c = 30 mol-%)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 69,7 Gewichtsteile Solventnaphta vorgelegt. Unter Rückflusskühlung, Stickstoffüberschleierung und Rühren wird eine Mischung aus 14,8 Gewichtsteilen N-[3-(trimethoxysilyl)propyl]-butylamin (Dynasilan ® 1189 der Fa. Degussa) (IIa) und 9,2 Gewichtsteilen Bis-[3-(trimethoxysilyl)propyl]-amin (Ia) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol-% liegt.

Die Lösung des teilsilanisierten Polyisocyanats weist einen Festkörpergehalt von 53,9 Gew.-% auf.

### Herstellbeispiel B2 - Herstellung eines teilsilanisierten Polyisocyanats (HDI mit 30 mol-% IIa und 70 mol% Ia: Umsetzungsgrad c = 30 mol-%)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 69,7 Gewichtsteile Solventnaphta vorgelegt. Unter Rückflusskühlung, Stickstoffüberschleierung und Rühren wird eine Mischung aus 6,4 Gewichtsteilen N-[3-(trimethoxysilyl)propyl]-butylamin (Dynasilan ® 1189 der Fa. Degussa) (IIa) und 21,5 Gewichtsteilen Bis-[3-(trimethoxysilyl)propyl]-amin (Ia) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol-% liegt.

Die Lösung des teilsilanisierten Polyisocyanats weist einen Festkörpergehalt von 55,0 Gew.-% auf.

### Herstellbeispiel VB2 - Herstellung eines teilsilanisierten Polyisocyanats (HDI mit 100 mol-% Ia: Umsetzungsgrad c = 30 mol-%) (Vergleichsbeispiel)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 88,0 Gewichtsteile Solventnaphta vorgelegt. Unter Rückflusskühlung, Stickstoffüberschleierung und Rühren werden 30,7 Gewichtsteile Gewichtsteilen Bis-[3-(trimethoxysilyi)propyl]-amin (Ia) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol-% liegt.

Die Lösung des teilsilanisierten Polyisocyanats weist einen Festkörper gehalt von 63,0 Gew.-% auf.

### Herstellbeispiel VB3 - Herstellung eines teilsilanisierten Polvisocyanats (HDI mit 100 mol-% IIa: Umsetzungsgrad c = 70 mol-%) (Vergleichsbeispiel)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 88,0 Gewichtsteile Solventnaphta vorgelegt. Unter Rückflusskühlung, Stickstoffüberschleierung und Rühren werden 49,4 Gewichtsteile N-[3-(trimethoxysilyl)propyl]-butylamin (IIa) (Dynasilan ® 1189 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 30 mol-% liegt.

Die Lösung des teilsilanisierten Polyisocyanats weist einen Festkörpergehalt von 54,8 Gew.-% auf.

### Herstellbeispiel B3 - Herstellung eines teilsilanisierten Polyisocyanats (HDI mit 70 mol-% IIa und 30 mol-% Ia: Umsetzungsgrad c = 70 mol-%)

In einem Dreihalsglaskolben, ausgestattet mit einem Rückflußkühler und einem Thermometer, werden 57,3 Gewichtsteile trimerisiertes Hexamethylendiisocyanat (HDI) (Basonat HI 100 der Fa. BASF AG) und 69,7 Gewichtsteile Solventnaphta vorgelegt. Unter Rückflusskühlung, Stickstoffüberschleierung und Rühren wird eine Mischung aus 34,6 Gewichtsteilen N-[3-(trimethoxysilyl)propyl]-butylamin (Dynasilan ® 1189 der Fa. Degussa) (IIa) und 21,5 Gewichtsteilen Bis-[3-(trimethoxysilyl)propyl]-amin (Ia) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 30 mol-% liegt.

Die Lösung des teilsilanisierten Polyisocyanats weist einen Festkörpergehalt von 61,9 Gew.-% auf.

### Herstellbeispiel B4 - Herstellung eines teilsilanisierten Polyisocyanats (HDI mit 30 mol-% IIa und 70 mol% Ia: Umsetzungsgrad c = 70 mol-%)

In einem Dreihalsglaskolben, ausgestattet mit einem Rückflußkühler und einem Thermometer, werden 57,3 Gewichtsteile trimerisiertes Hexamethylen-diisocyanat (HDI) (Basonat HI 100 der Fa. BASF AG) und 88,0 Gewichtsteile Solventnaphta vorgelegt. Unter Rückflusskühlung, Stickstoffüberschleierung und Rühren wird eine Mischung aus 14,8 Gewichtsteilen N-[3-(trimethoxysilyl)propyl]-butylamin (Dynasilan ® 1189 der Fa. Degussa) (IIa) und 50,2 Gewichtsteilen Bis-[3-(trimethoxysilyl)propyl]-amin (Ia) (Dynasilan ® 1124 der Fa. Degussa) so zudosiert, das 50 bis 60°C nicht überschritten werden. Nach Ende der Dosierung wird die Reaktionstemperatur bei 50 bis 60°C gehalten, bis der mittels Titration ermittelte Isocyanat-Massenanteil bei den theoretisch errechneten 70 mol-% liegt.

Die Lösung des teilsilanisierten Polyisocyanats weist einen Festkörpergehalt von 58,2 Gew.-% auf.

### Herstellung des Polyacrylatpolyols A

In einem Stahlkessel ausgestattet mit Monomerenzulauf, Initiatorzulauf, Thermometer, Ölheizung und Rückflusskühler werden 29,08 Gewichtsteile eines handelsüblichen aromatischen Lösemittelgemischs (Solventnaphtha ® der Fa. DHC Solvent Chemie GmbH) auf 140 °C aufgeheizt. Dann wird eine Mischung a1 aus 3,39 Gewichtsteilen Solventnaphtha und 2,24 Gewichtsteilen tert.-Butylperoxy-2-ethylhexanoat in einer solchen Geschwindigkeit unter Rühren zugegeben, dass die Zugabe der Mischung a1 nach 6,75 h abgeschlossen ist. 15 min nach Beginn der Zugabe der Mischung a1 wird eine Mischung a2 bestehend aus 4,97 Gewichtsteilen Styrol, 16,91 Gewichtsteilen tert.-Butylacrylat, 19,89 Gewichtsteilen 2-Hydroxypropylmethacrylat, 7,45 Gewichtsteilen n-Butylmethacrylat sowie 0,58 Gewichtsteilen Acrylsäure in einer solchen Geschwindigkeit zugegeben, dass die Zugabe der Mischung a2 nach 6 h abgeschlossen ist. Nach Zugabe der Mischung a1 wird das Reaktionsgemisch noch 2 h auf 140°C gehalten und anschließend auf unter 100°C abgekühlt. Anschließend wird die Reaktionsmischung noch mit einem Gemisch a3 aus 3,70 Gewichtsteilen 1-Methoxypropylacetat-2, 3,06 Gewichtsteilen Butylglykolacetat und 6,36 Gewichtsteilen Butylacetat 98/100 verdünnt.

Die erhaltene Lösung des Polyacrylatpolyols A weist einen Feststoffgehalt von 52,4% (1 h, 130°C, Umluftofen), eine Viskosität von 3,6 dPas (ICI-Platte-Kegel-Viskosimeter, 23 °C), eine Hydroxylzahl von 155 mg KOH/g und eine Säurezahl von 10-13 mg KOH/g auf.

### Formulierung der erfindungsgemäßen Beschichtungsmittel und der Vergleichsbeispiele

Die erfindungsgemäßen Beschichtungsmittel sowie die Vergleichsproben wurden folgendermaßen formuliert:

Die Komponente 1, enthaltend Komponente A (Polyol) und handelsübliche Additive und Katalysator und Lösungsmittel, wird kurz vor der Applikation mit Komponente 2, enthaltend Komponente B (modifiziertes Polyisocyanat),
vereinigt und solange verrührt bis eine homogene Mischung entsteht. Die Applikation erfolgt pneumatisch bei 2,5 bar in drei Spritzgängen. Danach wird die Beschichtung 5 Minuten bei Raumtemperatur abgelüftet und anschließend bei 140°C 22 Minuten eingebrannt.

In Tabelle 1 sind alle Beschichtungsmittel hinsichtlich der Anteile der Komponenten angeführt:

**Tabelle 1- Formulierung der erfindungsgemäßen Beschichtungsmittel sowie der Vergleichsbeispiele**

| Komponente B gemäß Beispiel | VB1 | B1 | B2 | VB2 | VB3 | B3 | B4 |
|---|---|---|---|---|---|---|---|
| Gewichtsteile Polyacrylatpolyol A gemäß Beispiel | 45,0 | 45,0 | 45,0 | 45,0 | 45,0 | 45,0 | 45,0 |
| Gewichtsteile Komponente B | 52,0 | 47,2 | 48,3 | 43,7 | 144,9 | 133,0 | 153,0 |
| Gewichtsteile Katalysator¹ (Nacure 4167, King Industries) nichtflüchtiger Anteil 25%) | 2,1 | 2,2 | 2,3 | 2,4 | 6,9 | 7,2 | 7,8 |
| Gewichtsteile BYK 301 (Verlaufsmittel, Byk Chemie) | 0,2 | 0,2 | 0,2 | 0,2 | 0,2 | 0,2 | 0,2 |
| Gewichtsteile Tinuvin 384.2 (Ciba) | 0,9 | 0,9 | 0,9 | 0,9 | 0,9 | 0,9 | 0,9 |
| Gewichtsteile Tinuvin 292 (Ciba) | 0,8 | 0,8 | 0,8 | 0,8 | 0,8 | 0,8 | 0,8 |
| Gewichtsteile Solvent-naphtha (DHC Solvent Chemie GmbH) | 20,0 | 20,0 | 20,0 | 20,0 | 20,0 | 20,0 | 20,0 |
| Äquivalentverhältnis freie Isocyanatgruppen in der Komponente B zu Hydroxylgruppen im Polyacrylatpolyol A | 1,00: 1,00 | 1,00: 1,00 | 1,00: 1,00 | 1,00: 1,00 | 1,00: 1,00 | 1,00: 1,00 | 1,00: 1,00 |

| | | | | | | | |
|---|---|---|---|---|---|---|---|
| ¹) Katalysator auf Basis aminblockierten Phosphorsäureteilester | | | | | | | |

Die Kratzfestigkeit der Oberflächen der resultierenden Beschichtungen wurde mit Hilfe des Crockmeter-Tests (in Anlehnung an EN ISO 105-X12 mit 10 Doppelhüben und 9N Auflagekraft unter Verwendung von 9um Schleifpapier (3M 281 Q wetordry^{™}production^{™}), unter anschließender Bestimmung des Restglanzes bei 20° mit einem handelsüblichen Glanzgerät), und des Hammertests (10 bzw 100 Doppelhübe mit Stahlwolle (RAKSO^{®}00(Fein)) und einem Auflagegewicht von 1 kg die mit einem Hammer durchgeführt werden. Anschließend wird wiederum der Restglanz bei 20° mit einem handelsüblichen Glanzgerät bestimmt) die Bewitterungstabilität mit Hilfe des CAM180-Tests (nach DIN EN ISO 11341 Feb 98 und DIN EN ISO 4892-2Nov00) untersucht. Die Ergebnisse sind in Tabelle 2 aufgeführt.

**Tabelle 2- Eigenschaften der mit den erfindunqsqemäßen Beschichtungsmitteln hergestellten Klarlackschichten**

| Beschichtungsmittel mit Komponente B gemäß Beispiel | VB1 | B1 | B2 | VB2 | VB3 | B3 | B4 |
|---|---|---|---|---|---|---|---|
| Crockmeter-Test (Restglanz in %) | 41 | 53 | 58 | 63 | 75 | 88 | 95 |
| Hammertest 10 DH (Restglanz in %) | 38 | 49 | 60 | 64 | 79 | 88 | 93 |
| Hammertest 100 DH(Restglanz in %) | 0 | 1 | 18 | 28 | 65 | 81 | 92 |
| CAM 180-Test (h) bis zum Auftreten von Rissen | 5500 | 5250 | 5000 | 4500 | 5250 | 5000 | 4000 |

Tabelle 2 zeigt die erfindungsgemäßen Beschichtungsmittel mit den Komponenten B1, B2, B3 und B4 im Vergleich zu Beschichtungsmitteln enthaltend ein Isocyanurataddukt B hervorgehend aus der Umsetzung mit dem HDI-Isocyanurat, nachfolgend kurz HDI, und ausschließlich einer Komponente Ia (Vergleichsbeispiel VB2) bzw IIa (Vergleichsbeispiele VB1 und VB3).

Bei einem Umsetzungsgrad der-Isocyanatgruppen des HDI von 30 mol-% zeigt VB1 (enthaltend Struktureinheiten II) gegenüber VB2 (enthaltend Struktureinheiten I) eine deutlich längere Zeit im CAM180 Test bis zum Auftreten von Rissen. Entsprechend zeigt bei einem Umsetzungsgrad der Isocyanatgruppen des HDI von 70 mol-% das Beispiel VB3 (enthaltend nur Struktureinheiten II) gegenüber B4 (enthaltend 70 mol% Struktureinheiten I) eine deutlich längere Zeit im CAM180 Test bis zum Auftreten von Rissen. Invers hierzu verhält sich die Kratzfestigkeit: Bei einem Umsetzungsgrad der Isocyanatgruppen des HDI von 30 mol-% zeigt VB1 (enthaltend Struktureinheiten II) gegenüber VB2 (enthaltend Struktureinheiten **I)** eine deutlich schwächere Kratzfestigkeit in den verschiedenen Kratztests. Entsprechend zeigt bei einem Umsetzungsgrad der Isocyanatgruppen des HDI von 70 mol-% das Beispiel VB3 (enthaltend nur Struktureinheiten II) gegenüber B4 (enthaltend 70 mol-% Struktureinheiten I) eine deutlich schwächere Kratzfestigkeit in den verschiedenen Kratztests. Da der relative Anteil der Struktur I somit für die Kratzfestigkeit und der Anteil der Struktur II für die Witterungsbeständigkeit verantwortlich zeigt, läßt eine sorgfältige Abmischung beider Siloxanamine Ia bzw IIa eine Feinabstimmung zwischen Bewitterungszeit und Kratzfestigkeit zu. Beispielhaft seien hier VB1 u VB2 gegenüber B1 und B2 in der Gruppe mit 30 mol-% Umsetzungsgrad der Isocyanalfunktionen gestellt. VB1 erreicht hohe Werte in der Bewitterung, jedoch ist die Kratzfestigkeit mäßig. VB2 hat gute Kratzfestigkeitswerte aber ist schwächer in der Bewitterung. Beide Beispiele B1 und B2 haben gegenüber VB1 bessere Kratzfestigkeiten und gegenüber VB2 bessere Bewitterungszeiten.

Analoges gilt für VB3 gegenüber B3 und B4 in der Gruppe mit 70 mol-% Umsetzungsgrad an Isocyanat, jedoch werden hier sowohl Kratzfestigkeit und Witterungsbeständigkeit durch den hohen relativen Anteil der Siloxanfunktionen noch stärker beeinflußt. Auch wird deutlich, dass bei einem hohen Umsetzungsgrad der Isocyanatfunktionen der relative Anteil der Struktur II die Witterungsbeständigkeit signifikant stärker beeinflußt als die Struktur I die Kratzfestigkeit wie man beim Vergleich der Werte von B3 u B4 leicht feststellt. Generell korreliert der Kratzfestigkeitswert mit dem Umsatz der Isocyanatgruppen mit den Verbindungen I und II, wobei für die Erzielung sehr hoher Kratzfestigkeiten auch ein höherer Umsatz der Isocyanatgruppen erforderlich ist.

Von Bedeutung ist ferner, dass die erhaltenen Beschichtungen die gute Kratzfestigkeit bereits direkt nach der Härtung von 20 min bei 140°C aufweisen und daher direkt nach der thermischen Härtung problemlos handhabbar sind.

## Patentansprüche

1. Beschichtungsmittel auf Basis aprotischer Lösemittel, enthaltend mindestens eine hydroxylgruppenhaltige Verbindung (A) sowie mindestens eine isocyanatgruppenhaltige Verbindung (B), **dadurch gekennzeichnet, dass**
(i) ein oder mehrere Bestandteile des Beschichtungsmittels als zusätzliche funktionelle Komponenten
zwischen 2,5 und 97,5 mol-%, bezogen auf die Gesamtheit der Struktureinheiten (I) und (II), mindestens einer Struktureinheit der Formel (I)
-N(X-SiR"x(OR')3-x)n(X'-SiR"y(OR')3-y)m (I)
wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
X,X' = linearer und/oder verzweigter Alkylen oder Cycloalkylenrest mit 1 bis 20 Kohlenstoffatomen,
R" = Alkyl, Cycloalkyl, Aryl oder Aralkyl, wobei die Kohlenstoffkette durch nicht benachbarte Sauerstoff-, Schwefel- oder NRa-Gruppen unterbrochen sein kann mit Ra = Alkyl, Cycloalkyl, Aryl oder Aralkyl,
n = 0 bis 2,
m = 0 bis 2,
m+n = 2 , sowie
x,y = 0 bis 2,
und
zwischen 2,5 und 97,5 mol-%, bezogen auf die Gesamtheit der Struktureinheiten (I) und (II), mindestens einer Struktureinheit der Formel (II)
-Z-(X-SiR"x(OR')3-x) (II),
wobei
Z = -NH-, -NR-,-O- mit
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
X = linearer und/oder verzweigter Alkylen oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x = 0 bis 2,
aufweisen
und
(ii) das Polyol (A) mindestens ein Poly(meth)acrylatpolyol enthält.

2. Beschichtungsmittel nach Anspruch 1, **dadurch gekennzeichnet, dass** ein oder mehrere Bestandteile des Beschichtungsmittels als zusätzliche funktionelle Komponenten zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (I) und (II), mindestens einer Struktureinheit der Formel (I) und zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (I) und (II), mindestens einer Struktureinheit der Formel (II), aufweisen.

3. Beschichtungsmittel nach Anspruch 1 oder 2, **dadurch gekennzeichnet, dass** die Strukturelemente (I) und (II) in Anteilen von 2,5 bis 97,5 mol-%, bezogen auf die Summe der für die Vernetzung im Beschichtungsmittel maßgeblichen funktionellen Gruppen, gebildet aus den Anteilen der Hydroxyl- und Isocyanatgruppen sowie den Anteilen der Strukturelemente (I) und (II), vorhanden sind.

4. Beschichtungsmittel nach einem der Ansprüche 1 bis 3, **dadurch gekennzeichnet, dass** das Polyisocyanat (B) die Struktureinheiten (I) und (II) aufweist.

5. Beschichtungsmittel nach Anspruch 4, **dadurch gekennzeichnet, dass** im Polyisocyanat (B)
zwischen 2,5 und 90 mol-%, der Isocyanatgruppen im Polyisocyanatgrundkörper zu Struktureinheiten (I) und
zwischen 2,5 und 90 mol-%, der Isocyanatgruppen im Polyisocyanatgrundkörper zu Struktureinheiten (II)
umgesetzt sind und der Gesamtanteil der zu den Struktureinheiten (I) und (II) umgesetzten Isocyanatgruppen im Polyisocyanatgrundkörper zwischen 5 und 95 mol-% liegt.

6. Beschichtungsmittel nach einem der Ansprüche 1 bis 5, **dadurch gekennzeichnet, dass** der Polyisocyanatgrundkörper ausgewählt ist aus der Gruppe 1,6-Hexamethylendiisocyanat, Isophorondiisocyanat, und 4,4'-Methylendicyclohexyldiisocyanat, der Biuret-Dimeren der vorgenannten Polyisocyanate und/oder der Isocyanurat-Trimeren der vorgenannten Polyisocyanate.

7. Beschichtungsmittel nach einem der Ansprüche 1 bis 6, **dadurch gekennzeichnet, dass** als Katalysator für die Härtung des Beschichtungsmittels zwischen 0,1 und 20 Gew.-%, bezogen auf die nichtflüchtigen Bestandteile des Beschichtungsmittels, einer aminblockierten Phosphorsäure eingesetzt wird.

8. Mehrstufiges Beschichtungsverfahren bei dem auf ein gegebenenfalls vorbeschichtetes Substrat eine pigmentierte Basislackschicht und danach eine Schicht aus einem Beschichtungsmittel auf Basis aprotischer Lösemittel, enthaltend mindestens eine hydroxylgruppenhaltige Verbindung (A) sowie mindestens eine isocyanatgruppenhaltige Verbindung (B), aufgebracht wird, **dadurch gekennzeichnet,**
**dass** ein oder mehrere Bestandteile des auf die Basislackschicht aufgebrachten Beschichtungsmittels als zusätzliche funktionelle Komponenten
zwischen 2,5 und 97,5 mol-%, bezogen auf die Gesamtheit der Struktureinheiten (I) und (II), mindestens einer Struktureinheit der Formel (I)
-N(X-SiR"x(OR')3-x)n(X'-SiR"y(OR')3-y)m (I)
wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
X,X' = linearer und/oder verzweigter Alkylen oder Cycloalkylenrest mit 1 bis 20 Kohlenstoffatomen,
R" = Alkyl, Cycloalkyl, Aryl oder Aralkyl, wobei die Kohlenstoffkette durch nicht benachbarte Sauerstoff-, Schwefel- oder NRa-Gruppen unterbrochen sein kann mit Ra = Alkyl, Cycloalkyl, Aryl oder Aralkyl,
n = 0 bis 2,
m = 0 bis 2,
m+n = 2 , sowie
x,y = 0 bis 2,
und
zwischen 2,5 und 97,5 mol%, bezogen auf die Gesamtheit der Struktureinheiten (I) und (II), mindestens einer Struktureinheit der Formel (II)
-Z-(X-SiR"x(OR')3-x) (II),
wobei
Z = -NH-, -NR-,-O- mit
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
X = linearer und/oder verzweigter Alkylen oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x = 0 bis 2,
aufweisen.

9. Mehrstufiges Beschichtungsverfahren nach Anspruch 8, **dadurch gekennzeichnet, dass** das Polyisocyanat (B) die Struktureinheiten (I) und (II) aufweist.

10. Mehrstufiges Beschichtungsverfahren nach Anspruch 9, **dadurch gekennzeichnet, dass** im Polyisocyanat (B) zwischen 2,5 und 90 mol-%, der Isocyanatgruppen im Polyisocyanatgrundkörper zu Struktureinheiten (I) und
zwischen 2,5 und 90 mol-%, der Isocyanatgruppen im Polyisocyanatgrundkörper zu Struktureinheiten (II)
umgesetzt sind und der Gesamtanteil der zu den Struktureinheiten (I) und (II) umgesetzten Isocyanatgruppen im Polyisocyanatgrundkörper zwischen 5 und 95 mol-% liegt.

11. Mehrstufiges Beschichtungsverfahren nach Anspruch 8, **dadurch gekennzeichnet, dass** nach dem Auftrag der pigmentierten Basislackschicht eine Schicht aus dem Beschichtungsmittel nach einem der Ansprüche 1 bis 7 aufgetragen wird.

12. Mehrstufiges Beschichtungsverfahren nach einem der Ansprüche 8 bis 11, **dadurch gekennzeichnet, dass** nach dem Auftrag der pigmentierten Basislackschicht der aufgebrachte Basislack zunächst bei Temperaturen von Raumtemperatur bis 80°C getrocknet wird und nach dem Auftrag des auf die Basislackschicht aufgebrachten Beschichtungsmittels bei Temperaturen von 30 bis 200°C während einer Zeit von 1 min bis zu 10 h gehärtet wird.

13. Anwendung des Verfahrens nach einem der Ansprüche 8 bis 12 für die Automobilserienlackierung und die Automobilreparaturlackierung.

14. Verwendung von Beschichtungsmitteln auf Basis aprotischer Lösemittel, enthaltend mindestens eine hydroxylgruppenhaltige Verbindung (A) sowie mindestens eine isocyanatgruppenhaltige Verbindung (B), wobei ein oder mehrere Bestandteile des Beschichtungsmittels als zusätzliche funktionelle Komponenten zwischen 2,5 und 97,5 mol-%, bezogen auf die Gesamtheit der Struktureinheiten (I) und (II), mindestens einer Struktureinheit der Formel (I)
-N(X-SiR"x(OR')3-x)n(X'-SiR"y(OR')3-y)m (I)
wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
X,X' = linearer und/oder verzweigter Alkylen oder Cycloalkylenrest mit 1 bis 20 Kohlenstoffatomen,
R" = Alkyl, Cycloalkyl, Aryl oder Aralkyl, wobei die Kohlenstoffkette durch nicht benachbarte Sauerstoff-, Schwefel- oder NRa-Gruppen unterbrochen sein kann mit Ra = Alkyl, Cycloalkyl, Aryl oder Aralkyl,
n = 0 bis 2,
m = 0 bis 2,
m+n = 2 , sowie
x,y = 0 bis 2,
und
zwischen 2,5 und 97,5 mol-%, bezogen auf die Gesamtheit der Struktureinheiten (I) und (II), mindestens einer Struktureinheit der Formel (II)
-Z-(X-SiR"x(OR')3-x) (II),
wobei
Z = -NH-, -NR-,-O- mit
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
X = linearer und/oder verzweigter Alkylen oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x = 0 bis 2,
aufweisen, als Klarlack für die Automobilserienlackierung und die Automobilreparaturfackierung.

15. Verwendung von Beschichtungsmitteln auf Basis aprotischer Lösemittel, enthaltend mindestens eine hydroxylgruppenhaltige Verbindung (A) sowie mindestens eine isocyanatgruppenhaltige Verbindung (B), wobei ein oder mehrere Bestandteile des Beschichtungsmittels als zusätzliche funktionelle Komponenten zwischen 2,5 und 97,5 mol-%, bezogen auf die Gesamtheit der Struktureinheiten (I) und (11), mindestens einer Struktureinheit der Formel (I)
-N(X-SiR"x(OR')3-x)n(X'-SiR"y(OR')3-y)m (I)
wobei R', X, X', R", n, m, m+n sowie x, y die oben angegebene Bedeutung haben,
und
zwischen 2,5 und 97,5 mol-%, bezogen auf die Gesamtheit der Struktureinheiten (I) und (II), mindestens einer Struktureinheit der Formel (II)
-Z-(X-SiR"x(OR')3-x) (II),
wobei Z, R, R', X, R" und x die oben angebene Bedeutung haben,
aufweisen, als transparenter Klarlack zur Beschichtung von transparenten Kunststoffsubstraten.

## Claims

1. Coating composition based on aprotic solvents and comprising at least one hydroxyl-containing compound (A) and at least one isocyanato-containing compound (B), **characterized in that**
(i) one or more constituents of the coating composition comprise, as additional functional components, between 2.5 and 97.5 mol%, based on the entirety of structural units (I) and (II), of at least one structural unit of the formula (I)
-N (X-SiR"x(OR')3-x)n(X'-SiR"y(OR')3-y)m (I)
where
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl,
X,X' = linear and/or branched alkylene or cycloalkylene radical having 1 to 20 carbon atoms,
R'" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
n = 0 to 2,
m = 0 to 2,
m+n = 2, and
x,y = 0 to 2,
and
between 2.5 and 97.5 mol%, based on the entirety of structural units (I) and (II), of at least one structural unit of the formula (II)
-Z-(X-SiR''x(OR')3-x) (II),
where
Z = -NH-, -NR-, -O-, with
R = hydrogen, alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl,
X = linear and/or branched alkylene or cycloalkylene radical having 1 to 20 carbon atoms,
R" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
x = 0 to 2,
and
(ii) the polyol (A) comprises at least one poly(meth)acrylate polyol.

2. Coating composition according to Claim 1, **characterized in that** one or more constituents of the coating composition contain as additional functional components between 5 and 95 mol%, more particularly between 10 and 90 mol%, more preferably between 20 and 80 mol%, and very particularly between 30 and 70 mol%, based in each case on the entirety of the structural units (I) and (II), of at least one structural unit of the formula (I), and between 5 and 95 mol%, more particularly between 10 and 90 mol%, more preferably between 20 and 80 mol%, and very particularly between 30 and 70 mol%, based in each case on the entirety of the structural units (I) and (II), of at least one structural unit of the formula (II).

3. Coating composition according to Claim 1 or 2, **characterized in that** the structural elements (I) and (II) are present in fractions of 2.5 to 97.5 mol%, based on the sum of the functional groups critical for crosslinking in the coating composition, formed from the fractions of the hydroxyl and isocyanate groups and from the fractions of the structural elements (I) and (II).

4. Coating composition according to any one of Claims 1 to 3, **characterized in that** the polyisocyanate (B) comprises the structural units (I) and (II).

5. Coating composition according to Claim 4, **characterized in that**, in the polyisocyanate (B),
between 2.5 and 90 mol% of the isocyanate groups in the core polyisocyanate structure have undergone reaction to structural units (I) and between 2.5 and 90 mol% of the isocyanate groups in the core polyisocyanate structure have undergone reaction to structural units (II) and the total fraction of the isocyanate groups in the core polyisocyanate structure that have undergone reaction to structural units (I) and (II) is between 5 and 95 mol%.

6. Coating composition according to any one of Claims 1 to 5, **characterized in that** the core polyisocyanate structure is selected from the group of 1,6-hexamethylene diisocyanate, isophorone diisocyanate, and 4,4'-methylenedicyclohexyl diisocyanate, the biuret dimers of the aforementioned polyisocyanates and/or the isocyanurate trimers of the aforementioned polyisocyanates.

7. Coating composition according to any one of Claims 1 to 6, **characterized in that** between 0.1% and 20% by weight, based on the nonvolatile constituents of the coating composition, of an amine-blocked phosphoric acid is used as catalyst for curing the coating composition.

8. Multistage coating method which comprises applying a pigmented basecoat film to an uncoated or precoated substrate and thereafter applying a film of a coating composition based on aprotic solvents, comprising at least one hydroxyl-containing compound (A) and at least one isocyanato-containing compound (B),
**characterized in that**
one or more constituents of the coating composition applied to the basecoat film comprise, as additional functional components, between 2.5 and 97.5 mol%, based on the entirety of structural units (I) and (II), of at least one structural unit of the formula (I)
-N(X-SiR"x(OR')3-x)n(X'-SiR''y(OR')3-y)m (I)
where
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl,
X,X' = linear and/or branched alkylene or cycloalkylene radical having 1 to 20 carbon atoms,
R" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
n = 0 to 2,
m = 0 to 2,
m+n = 2, and
x,y = 0 to 2,
and
between 2.5 and 97.5 mol%, based on the entirety of structural units (I) and (II), of at least one structural unit of the formula (II)
-Z-(X-SiR"x(OR')3-x) (II),
where
Z = -NH-, -NR-, -O-, with
R = hydrogen, alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl,
X = linear and/or branched alkylene or cycloalkylene radical having 1 to 20 carbon atoms,
R" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
x = 0 to 2.

9. Multistage coating method according to Claim 8, **characterized in that** the polyisocyanate (B) comprises the structural units (I) and (II).

10. Multistage coating method according to Claim 9, **characterized in that**, in the polyisocyanate (B),
between 2.5 and 90 mol% of the isocyanate groups in the core polyisocyanate structure have undergone reaction to structural units (I) and between 2.5 and 90 mol% of the isocyanate groups in the core polyisocyanate structure have undergone reaction to structural units (II) and the total fraction of the isocyanate groups in the core polyisocyanate structure that have undergone reaction to structural units (I) and (II) is between 5 and 95 mol%.

11. Multistage coating method according to Claim 8, **characterized in that**, following the application of the pigmented basecoat film, a film of the coating composition according to any one of Claims 1 to 7 is applied.

12. Multistage coating method according to any one of Claims 8 to 11, **characterized in that**, following the application of the pigmented basecoat film, the applied basecoat material is first dried at temperatures from room temperature to 80°C and, following the application of the coating composition applied to the basecoat film, the system is cured at temperatures from 30 to 200°C for a time of 1 min up to 10 h.

13. Application of the method according to any one of Claims 8 to 12 for automotive OEM finishing and automotive refinish.

14. Use of coating compositions based on aprotic solvents and comprising at least one hydroxyl-containing compound (A) and at least one isocyanato-containing compound (B), wherein one or more constituents of the coating composition comprise, as additional functional components, between 2.5 and 97.5 mol%, based on the entirety of structural units (I) and (II), of at least one structural unit of the formula (I)
-N(X-SiR"x(OR')3-x)n(X'-SiR"y(OR')3-y)m (I)
where
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl,
X,X' = linear and/or branched alkylene or cycloalkylene radical having 1 to 20 carbon atoms,
R" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
n = 0 to 2,
m = 0 to 2,
m+n = 2, and
x,y = 0 to 2,
and
between 2.5 and 97.5 mol%, based on the entirety of structural units (I) and (II), of at least one structural unit of the formula (II)
-Z-(X-SiR"x(OR')3-x) (II),
where
Z = -NH-, -NR-, -O-, with
R = hydrogen, alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl,
X = linear and/or branched alkylene or cycloalkylene radical having 1 to 20 carbon atoms,
R" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
x = 0 to 2,
as clearcoat material for automotive OEM finishing and automotive refinish.

15. Use of coating compositions based on aprotic solvents and comprising at least one hydroxyl-containing compound (A) and at least one isocyanato-containing compound (B), wherein one or more constituents of the coating composition comprise, as additional functional components, between 2.5 and 97.5 mol%, based on the entirety of structural units (I) and (II), of at least one structural unit of the formula (I)
-N(X-SiR"x(OR')3-x)n(X'-SiR"y(OR')3-y)m (I)
where
R', X, X', R" , n, m, m+n, and x and y are as defined above,
and
between 2.5 and 97.5 mol%, based on the entirety of structural units (I) and (II), of at least one structural unit of the formula (II)
-Z-(X-SiR"x(OR')3-x) (II),
where Z, R, R', X, R" and x are as defined above,
as clearcoat material for the coating of transparent plastics substrates.

## Revendications

1. Agent de revêtement à base de solvants aprotiques, contenant au moins un composé (A) contenant des groupes hydroxyle ainsi qu'au moins un composé (B) contenant des groupes isocyanate, **caractérisé en ce que**
(i) un ou plusieurs constituants de l'agent de revêtement contien(nen)t, comme composants fonctionnels supplémentaires, entre 2,5 et 97,5% en mole, par rapport à la totalité des unités de structure (I) et (II), d'au moins une unité de structure de formule (I)
-N(X-SiR"ₓ(OR')₃₋ₓ)ₙ(X'-SiR"_{y}(OR')_{3-y})ₘ (I)
où
R' = hydrogène, alkyle ou cycloalkyle, où la chaîne carbonée peut être interrompue par des groupes oxygène, soufre ou NRa non adjacents, avec Ra = alkyle, cycloalkyle, aryle ou aralkyle,
X,X' = un radical alkylène linéaire et/ou ramifié ou cycloalkylène, comprenant 1 à 20 atomes de carbone,
R" = alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
n = 0 à 2,
m = 0 à 2,
m + n = 2, et
x, y = 0 à 2,
et
entre 2,5 et 97,5% en mole, par rapport à la totalité des unités de structure (I) et (II), d'au moins une unité de structure de formule (II)
-Z-(X-SiR"ₓ(OR')₃₋ₓ) (II),
où
Z = -NH-, -NR-, -O- avec
R = hydrogène, alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
R' = hydrogène, alkyle ou cycloalkyle, où la chaîne carbonée peut être interrompue par des groupes oxygène, soufre ou NRa non adjacents, avec Ra = alkyle, cycloalkyle, aryle ou aralkyle,
X = un radical alkylène linéaire et/ou ramifié ou cycloalkylène, comprenant 1 à 20 atomes de carbone,
R" = alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
x = 0 à 2,
et
(ii) le polyol (A) contient au moins un poly(méth)acrylate-polyol.

2. Agent de revêtement selon la revendication 1, **caractérisé en ce qu'**un ou plusieurs constituants de l'agent de revêtement présente(nt), comme composants fonctionnels supplémentaires, entre 5 et 95% en mole, en particulier entre 10 et 90% en mole, de manière particulièrement préférée entre 20 et 80% en mole, et de manière tout particulièrement préférée entre 30 et 70% en mole, à chaque fois par rapport à la totalité des unités de structure (I) et (II), d'au moins une unité de structure de formule (I) et entre 5 et 95% en mole, en particulier entre 10 et 90% en mole, de manière particulièrement préférée entre 20 et 80% en mole, et de manière tout particulièrement préférée entre 30 et 70% en mole, à chaque fois par rapport à la totalité des unités de structure (I) et (II), d'au moins une unité de structure de formule (II).

3. Agent de revêtement selon la revendication 1 ou 2, **caractérisé en ce que** les éléments de structure (I) et (II) sont présents en des proportions de 2,5 à 97,5% en mole, par rapport à la somme des groupes fonctionnels déterminants pour la réticulation dans l'agent de revêtement, formée par les proportions de groupes hydroxyle et isocyanate ainsi que par les proportions des éléments de structure (I) et (II).

4. Agent de revêtement selon l'une quelconque des revendications 1 à 3, **caractérisé en ce que** le polyisocyanate (B) présente les unités de structure (I) et (II).

5. Agent de revêtement selon la revendication 4, **caractérisé en ce que** dans le polyisocyanate (B) entre 2,5 et 90% en mole des groupes isocyanate dans le corps de base polyisocyanate sont transformés en unités de structure (I) et
entre 2,5 et 90% en mole des groupes isocyanate dans le corps de base polyisocyanate sont transformés en unités de structure (II)
et la proportion totale des groupes isocyanate transformés en unités de structure (I) et (II) dans le corps de base polyisocyanate se situe entre 5 et 95% en mole.

6. Agent de revêtement selon l'une quelconque des revendications 1 à 5, **caractérisé en ce que** le corps de base polyisocyanate est choisi dans le groupe formé par le 1,6-hexaméthylènediisocyanate, l'isophoronediisocyanate, et le 4,4'-méthylènedicyclohexyldiisocyanate, les dimères de biuret des polyisocyanates susmentionnés et/ou les trimères d'isocyanurate des polyisocyanates susmentionnés.

7. Agent de revêtement selon l'une quelconque des revendications 1 à 6, **caractérisé en ce qu'**on utilise comme catalyseur pour le durcissement de l'agent de revêtement entre 0,1 et 20% en poids, par rapport aux constituants non volatils de l'agent de revêtement, d'un acide phosphorique bloqué par amine.

8. Procédé de revêtement en plusieurs étapes, dans lequel on applique, sur un substrat le cas échéant revêtu au préalable, une couche de laque de base pigmentée, puis une couche d'un agent de revêtement à base de solvants aprotiques, contenant au moins un composé (A) contenant des groupes hydroxyle ainsi qu'au moins un composé (B) contenant des groupes isocyanate, **caractérisé en ce qu'**un ou plusieurs constituants de l'agent de revêtement appliqué sur la couche de laque de base présente(nt), comme composants fonctionnels supplémentaires,
entre 2,5 et 97,5% en mole, par rapport à la totalité des unités de structure (I) et (II), d'au moins une unité de structure de formule (I)
-N (X-SiR"ₓ(OR')₃₋ₓ)ₙ(X'-SiR"_{y}(OR')_{3-y})ₘ (I)
où
R' = hydrogène, alkyle ou cycloalkyle, où la chaîne carbonée peut être interrompue par des groupes oxygène, soufre ou NRa non adjacents, avec Ra = alkyle, cycloalkyle, aryle ou aralkyle,
X,X' = un radical alkylène linéaire et/ou ramifié ou cycloalkylène, comprenant 1 à 20 atomes de carbone,
R" = alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
n = 0 à 2,
m = 0 à 2,
m + n = 2, et
x, y = 0 à 2,
et
entre 2,5 et 97,5% en mole, par rapport à la totalité des unités de structure (I) et (II), d'au moins une unité de structure de formule (II)
-Z-(X-SiR"ₓ(OR')₃₋ₓ) (II),
où
Z = -NH-, -NR-, -O- avec
R = hydrogène, alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
R' = hydrogène, alkyle ou cycloalkyle, où la chaîne carbonée peut être interrompue par des groupes oxygène, soufre ou NRa non adjacents, avec Ra = alkyle, cycloalkyle, aryle ou aralkyle,
X = un radical alkylène linéaire et/ou ramifié ou cycloalkylène, comprenant 1 à 20 atomes de carbone,
R" = alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
x = 0 à 2.

9. Procédé de revêtement en plusieurs étapes selon la revendication 8, **caractérisé en ce que** le polyisocyanate (B) présente les unités de structure (I) et (II).

10. Procédé de revêtement en plusieurs étapes selon la revendication 9, **caractérisé en ce que** dans le polyisocyanate (B)
entre 2,5 et 90% en mole des groupes isocyanate dans le corps de base polyisocyanate sont transformés en unités de structure (I) et
entre 2,5 et 90% en mole des groupes isocyanate dans le corps de base polyisocyanate sont transformés en unités de structure (II)
et la proportion totale des groupes isocyanate transformés en unités de structure (I) et (II) dans le corps de base polyisocyanate se situe entre 5 et 95% en mole.

11. Procédé de revêtement en plusieurs étapes selon la revendication 8, **caractérisé en ce qu'**après l'application de la couche de laque de base pigmentée, on applique une couche de l'agent de revêtement selon l'une quelconque des revendications 1 à 7.

12. Procédé de revêtement en plusieurs étapes selon l'une quelconque des revendications 8 à 11, **caractérisé en ce qu'**après l'application de la couche de laque de base pigmentée, on sèche d'abord la couche de laque de base appliquée à des températures allant de la température ambiante à 80°C et après l'application de l'agent de revêtement appliqué sur la couche de laque de base, on durcit à des températures de 30 à 200°C pendant un laps de temps de 1 min à 10 h.

13. Utilisation du procédé selon l'une quelconque des revendications 8 à 12 pour le laquage en série et le laquage de réparation de voitures.

14. Utilisation d'agents de revêtement à base de solvants aprotiques, contenant au moins un composé (A) contenant des groupes hydroxyle ainsi qu'au moins un composé (B) contenant des groupes isocyanate, où un ou plusieurs constituants de l'agent de revêtement contien(nen)t, comme composants fonctionnels supplémentaires, entre 2,5 et 97,5% en mole, par rapport à la totalité des unités de structure (I) et (II), d'au moins une unité de structure de formule (I)
-N(X-SiR"ₓ(OR')₃₋ₓ)ₙ(X'-SiR"_{y}(OR')_{3-y})ₘ (I)
où
R' = hydrogène, alkyle ou cycloalkyle, où la chaîne carbonée peut être interrompue par des groupes oxygène, soufre ou NRa non adjacents, avec Ra = alkyle, cycloalkyle, aryle ou aralkyle,
X,X' = un radical alkylène linéaire et/ou ramifié ou cycloalkylène, comprenant 1 à 20 atomes de carbone,
R" = alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
n = 0 à 2,
m = 0 à 2,
m + n = 2, et
x, y = 0 à 2,
et
entre 2,5 et 97,5% en mole, par rapport à la totalité des unités de structure (I) et (II), d'au moins une unité de structure de formule (II)
-Z-(X-SiR"ₓ(OR')₃₋ₓ) (II),
où
Z = -NH-, -NR-,-O- avec
R = hydrogène, alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
R' = hydrogène, alkyle ou cycloalkyle, où la chaîne carbonée peut être interrompue par des groupes oxygène, soufre ou NRa non adjacents, avec Ra = alkyle, cycloalkyle, aryle ou aralkyle,
X = un radical alkylène linéaire et/ou ramifié ou cycloalkylène, comprenant 1 à 20 atomes de carbone,
R" = alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
x = 0 à 2,
comme laque claire pour le laquage en série et le laquage de réparation de voitures.

15. Utilisation d'agents de revêtement à base de solvants aprotiques, contenant au moins un composé (A) contenant des groupes hydroxyle ainsi qu'au moins un composé (B) contenant des groupes isocyanate, où un ou plusieurs constituants de l'agent de revêtement contien(nen)t, comme composants fonctionnels supplémentaires, entre 2,5 et 97,5% en mole, par rapport à la totalité des unités de structure (I) et (II), d'au moins une unité de structure de formule (I)
-N(X-SiR"ₓ(OR')₃₋ₓ)ₙ(X'-SiR"_{y}(OR')_{3-y})ₘ (I)
où R', X, X' , R", n, m, m + n ainsi que x, y présentent la signification indiquée ci-dessus,
et
entre 2,5 et 97,5% en mole, par rapport à la totalité des unités de structure (I) et (II), d'au moins une unité de structure de formule (II)
-Z-(X-SiR"ₓ(OR')₃₋ₓ) (II),
où Z, R, R', X, R" et x ont la signification indiquée ci-dessus,
comme laque claire transparente pour le revêtement de substrats transparents en matériau synthétique.
